# EUROPEAN PATENT SPECIFICATION

(11) **EP 3 965 457 B1**
(45) Date of publication and mention of the grant of the patent: **28.10.2026**
(21) Application number: 20809515.8
(22) Date of filing: 22.05.2020
(51) Int. Cl.: H04W 24/10, H04B 7/08, H04W 74/0833, H04W 74/0838

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 23.05.2019 CN 201910436156
(43) Date of publication of application: 09.03.2022
(73) Proprietor: Huawei Technologies Co., Ltd., Shenzhen, Guangdong 518129 (CN)
(72) Inventor: GE, Quan, Shenzhen, Guangdong 518129 (CN); ZHANG, Liwen, Shenzhen, Guangdong 518129 (CN); XU, Zhou, Shenzhen, Guangdong 518129 (CN); GAO, Quanzhong, Shenzhen, Guangdong 518129 (CN)
(74) Representative: Maiwald GmbH
(86) International application number: PCT/CN2020/091785
(87) International publication number: WO 2020/233701

(56) References cited:
- EP-A1- 3 445 124
- CN-A- 101 944 940
- CN-A- 104 285 385
- CN-A- 108 235 444
- CN-A- 110 324 842
- US-A1- 2006 120 395
- US-A1- 2012 327 872
- US-A1- 2013 301 567
- US-A1- 2018 102 827
- CATT: "Discussion on need of DL and UL RS association", vol. RAN WG1, no. Hangzhou; 20170515 - 20170519, 14 May 2017 (2017-05-14), XP051272687, Retrieved from the Internet <URL:http://www.3gpp.org/ftp/Meetings_3GPP_SYNC/RAN1/Docs/> [retrieved on 20170514]
- AT&T: "NR Random Access Procedure Design", 3GPP DRAFT; R1-1612362 NR-RANDOMACCESS, vol. RAN WG1, 5 November 2016 (2016-11-05), Reno, USA, pages 1 - 5, XP051190420

## Description

### TECHNICAL FIELD

Embodiments of this application relate to the communication field, and in particular, to a communication method and a communication apparatus.

### BACKGROUND

US2013/301567A1 describes a method of performing beamforming in a base station. It is described that the method includes receiving random access channel signals transmitted in one or more transmit beams from a terminal, using one or more receive beams, determining at least one best transmit beam from the one or more transmit beams and at least one best receive beam from the one or more receive beams, and transmitting information about the best transmit beam and the best receive beam to the terminal.

US2006/120395A1 describes a method and apparatus for antenna switching, grouping, and channel assignments in wireless communication systems. It is described that this allows multiuser diversity to be exploited with simple antenna operations, therefore increasing the capacity and performance of wireless communications systems. It is described that channel characteristics indicative of signal reception quality for downlink or bi-directional traffic for each channel/antenna resource combination are measured or estimated at a subscriber, and that corresponding channel characteristic information is returned to the base station. It is described that channel characteristics information may also be measured or estimated for uplink or bi-directional signals received at each of multiple receive antenna resources, and that the base station employs channel allocation logic to assign uplink, downlink and/or bi-directional channels for multiple subscribers based on channel characteristics measured and/or estimated for the uplink, downlink and/or bi-directional channels.

In a conventional cellular mobile communication system, path losses of an uplink and a downlink are considered to be basically the same. Generally, channel quality of an uplink corresponding to a downlink with optimal channel quality is also optimal. Generally, user equipment (user equipment, UE) measures channel quality of a downlink, determines an optimal downlink based on measurement results, and considers default that an uplink corresponding to the optimal downlink is an optimal uplink. The UE communicates with a network side on the optimal uplink and the optimal downlink.

However, in an actual network, UE does not consider that an uplink corresponding to an optimal downlink is an uplink with optimal channel quality. Particularly, in a 5th generation (5th generation, 5G) communication system, because an uplink and a downlink are decoupled from each other, cases in which spectrums and antennas of the uplink and the downlink are inconsistent and path losses of the uplink and the downlink are inconsistent are more common. Therefore, there is a high probability that an uplink corresponding to an optimal downlink is not an uplink with optimal channel quality. If the UE always considers by default that the uplink corresponding to the optimal downlink is the optimal uplink, and communicates with the network side on the uplink, uplink communication performance is affected.

### SUMMARY

Embodiments of this application provide a communication method and a communication apparatus, to select an uplink with optimal channel quality for UE, and improve transmission performance in uplink communication.

To achieve the foregoing objectives, the following technical solutions are used in the embodiments of this application. The invention and its scope of protection is defined in the appended independent claims. The appended dependent claims define embodiments of the invention. The following aspects and implementations of the disclosure provide examples of how technical subject matters can be combined.

According to a first aspect, a communication method is disclosed. The communication method includes: receiving, by an access network device, a first message from a terminal by using at least two transceiver points; measuring, by the access network device, at least two uplinks based on the first message received by the at least two transceiver points, and determining a first uplink based on obtained measurement results, where the first uplink is an uplink with an optimal measurement result in the at least two uplinks, and the at least two uplinks are communication links between the at least two transceiver points and the terminal; and sending a second message to the terminal on a first downlink, where the second message is used by the terminal to perform uplink communication on the first uplink; and the at least two transceiver points include a first transceiver point and a second transceiver point, the first uplink is established on the first transceiver point, and the first downlink is established on the second transceiver point; or the at least two transceiver points include a first transceiver point and a third transceiver point, the first uplink is established on the first transceiver point, the first downlink is established on a second transceiver point, and the third transceiver point is a transceiver point corresponding to the second transceiver point.

In the method provided in this embodiment of this application, an optimal uplink no longer depends on a downlink measurement result of the UE. In an uplink and downlink decoupling scenario, a base station determines an optimal uplink through uplink measurement, and the optimal uplink may not be an uplink corresponding to an optimal downlink, that is, the optimal uplink and the optimal downlink may be established on different transceiver points. The UE may perform uplink communication on an uplink with optimal channel quality, and perform downlink communication on a downlink with optimal channel quality, to ensure performance of a communication system. In addition, the base station does not need to maintain a plurality of uplinks, so that resource overheads on a network side are reduced.

With reference to the first aspect, in a first possible implementation of the first aspect that is not according to the claimed invention, the first message includes a random access preamble, and is used by the terminal to perform random access. The second message includes information about a time-frequency resource used for a radio resource control RRC connection setup request, where the time-frequency resource used for the RRC connection setup request belongs to a first time-frequency resource, and the first time-frequency resource is a time-frequency resource configured for the first transceiver point.

In this embodiment of this application, an uplink with optimal channel quality may be selected for the terminal that performs contention-based random access. An Msg1 (the first message) is received from the terminal by using a plurality of transceiver points, and the received Msg1 is measured, so that the uplink with optimal channel quality may be determined. In addition, a time-frequency resource is allocated based on the time-frequency resource of the first transceiver point to an uplink message (for example, the RRC connection setup request) subsequently sent by the terminal, and the terminal may perform uplink communication with the access network device on the uplink with optimal channel quality, to improve network performance.

With reference to the first possible implementation of the first aspect, in a second possible implementation of the first aspect that is not according to the claimed invention, the method further includes: receiving, on the first uplink, the RRC connection setup request sent by the terminal by using the time-frequency resource used for the RRC connection setup request.

In this embodiment of this application, after the uplink with optimal channel quality is determined for the terminal, the base station no longer receives the uplink message on the uplink corresponding to the optimal downlink, and may receive, on the uplink with optimal channel quality, the uplink message sent by the terminal, for example, the RRC connection setup request, to improve network performance.

With reference to the first aspect, in a third possible implementation of the first aspect, the first message includes a sounding reference signal SRS. With reference to the first aspect, in the third possible implementation of the first aspect that is not according to the claimed invention, the second message includes information about a time-frequency resource used for a physical uplink shared channel, where the time-frequency resource used for the physical uplink shared channel belongs to a first time-frequency resource, and the first time-frequency resource is a time-frequency resource configured for the first transceiver point.

In this embodiment of this application, an uplink with optimal channel quality may be selected for the terminal in a connected state. The SRS (the first message) is received from the terminal by using a plurality of transceiver points, and the received SRS is measured, so that the uplink with optimal channel quality may be determined. In addition, a time-frequency resource is allocated based on the time-frequency resource of the first transceiver point to an uplink message (for example, the physical uplink shared channel) subsequently sent by the terminal, and the terminal may perform uplink communication with the access network device on the uplink with optimal channel quality, to improve network performance.

With reference to the third possible implementation of the first aspect, in a fourth possible implementation of the first aspect that is not according to the claimed invention, the method further includes: receiving, on the first uplink, the physical uplink shared channel sent by the terminal by using the time-frequency resource used for the physical uplink shared channel.

In this embodiment of this application, after the uplink with optimal channel quality is determined for the terminal, the base station no longer receives the uplink message on the uplink corresponding to the optimal downlink, and may receive, on the uplink with optimal channel quality, the uplink message sent by the terminal, for example, the physical uplink shared channel, to improve network performance.

With reference to the first aspect, in a fifth possible implementation of the first aspect, the first message includes an SRS. The second message includes a random access preamble, information about a time-frequency resource used for the random access preamble, and random access response beam information, where the time-frequency resource used for the random access preamble belongs to a first time-frequency resource, the first time-frequency resource is a time-frequency resource configured for the first transceiver point, and the random access response beam information is used to indicate a beam for sending a random access response.

In this embodiment of this application, an uplink with optimal channel quality may be selected for the terminal in a connected state. The SRS (the first message) is received from the terminal by using a plurality of transceiver points, and the received SRS is measured, so that the uplink with optimal channel quality may be determined. In addition, the terminal is indicated to access a new uplink in a contention-free random access manner. A time-frequency resource is allocated based on the time-frequency resource of the first transceiver point to an uplink message (for example, the random access preamble for the contention-free random access) subsequently sent by the terminal, and the terminal may perform uplink communication with the access network device on the uplink with optimal channel quality, to improve network performance.

With reference to the first aspect, in a sixth possible implementation of the first aspect, the method further includes: receiving, on the first uplink, the random access preamble sent by the terminal by using the time-frequency resource used for the random access preamble.

In this embodiment of this application, after the uplink with optimal channel quality is determined for the terminal, the base station no longer receives the uplink message on the uplink corresponding to the optimal downlink, and may receive, on the uplink with optimal channel quality, the uplink message sent by the terminal, for example, a random access preamble for contention-free random access, to improve network performance.

With reference to the sixth possible implementation of the first aspect, in a seventh possible implementation of the first aspect, the time-frequency resource used for the random access preamble is used to indicate to perform downlink communication with the terminal on the first downlink.

In this embodiment of this application, after determining the new optimal uplink (that is, the first uplink), the base station may allocate, based on the first time-frequency resource (that is, the time-frequency resource configured for the first transceiver point), a specified time-frequency resource to the random access preamble. When the terminal sends the random access preamble by using the specified time-frequency resource, the base station may identify the resource, and may determine that an uplink of the terminal may be reselected by the base station based on an uplink measurement result, that is, an optimal uplink of the terminal is changed, an optimal downlink of the terminal is not changed, and a downlink message still needs to be sent to the terminal on the optimal downlink (that is, the first downlink) currently configured for the terminal.

With reference to the fifth to the seventh possible implementations of the first aspect, in an eighth possible implementation of the first aspect, the method further includes: receiving the random access response beam information sent by the terminal; or determining the random access response beam information based on a downlink traffic beam of the terminal.

According to a second aspect, a communication apparatus is disclosed. The communication apparatus includes: a communication unit, configured to receive a first message from a terminal by using at least two transceiver points; and a processing unit, configured to: measure at least two uplinks based on the first message received by the at least two transceiver points, and determine a first uplink based on obtained measurement results, where the first uplink is an uplink with an optimal measurement result in the at least two uplinks, and the at least two uplinks are communication links between the at least two transceiver points and the terminal. The communication unit is further configured to send a second message to the terminal on a first downlink, where the second message is used by the terminal to perform uplink communication on the first uplink. The first uplink is established on a first transceiver point, and the first downlink is established on a second transceiver point. The at least two transceiver points include the first transceiver point and the second transceiver point, or the at least two transceiver points include the first transceiver point and a third transceiver point, and the third transceiver point is a transceiver point corresponding to the second transceiver point.

With reference to the second aspect, in a first possible implementation of the second aspect, the first message includes a random access preamble, and is used by the terminal to perform random access. The second message includes information about a time-frequency resource used for a radio resource control RRC connection setup request, where the time-frequency resource used for the RRC connection setup request belongs to a first time-frequency resource, and the first time-frequency resource is a time-frequency resource configured for the first transceiver point.

With reference to the first possible implementation of the second aspect, in a second possible implementation of the second aspect, the communication unit is specifically configured to receive, on the first uplink, the RRC connection setup request sent by the terminal by using the time-frequency resource used for the RRC connection setup request.

With reference to the second aspect, in a third possible implementation of the second aspect, the first message includes a sounding reference signal SRS. The second message includes information about a time-frequency resource used for a physical uplink shared channel, where the time-frequency resource used for the physical uplink shared channel belongs to a first time-frequency resource, and the first time-frequency resource is a time-frequency resource configured for the first transceiver point.

With reference to the third possible implementation of the second aspect, in a fourth possible implementation of the second aspect, the communication unit is specifically configured to receive, on the first uplink, the physical uplink shared channel sent by the terminal by using the time-frequency resource used for the physical uplink shared channel. With reference to the second aspect, in a fifth possible implementation of the second aspect, the first message includes an SRS. The second message includes a random access preamble, information about a time-frequency resource used for the random access preamble, and random access response beam information, where the time-frequency resource used for the random access preamble belongs to a first time-frequency resource, the first time-frequency resource is a time-frequency resource configured for the first transceiver point, and the random access response beam information is used to indicate a beam for sending a random access response.

With reference to the fifth possible implementation of the second aspect, in a sixth possible implementation of the second aspect, the communication unit is specifically configured to receive, on the first uplink, the random access preamble sent by the terminal by using the time-frequency resource used for the random access preamble.

With reference to the sixth possible implementation of the second aspect, in a seventh possible implementation of the second aspect, the time-frequency resource used for the random access preamble is used to indicate to perform downlink communication with the terminal on the first downlink.

With reference to any one of the fifth to the seventh possible implementations of the second aspect, in an eighth possible implementation of the second aspect, the communication unit is further configured to receive the random access response beam information sent by the terminal; or the processing unit is further configured to determine the random access response beam information based on a downlink traffic beam of the terminal.

According to a third aspect, a communication apparatus is disclosed. The communication apparatus includes: a communication interface, configured to receive a first message from a terminal by using at least two transceiver points; and a processor, configured to: measure at least two uplinks based on the first message received by the at least two transceiver points, and determine a first uplink based on obtained measurement results, where the first uplink is an uplink with an optimal measurement result in the at least two uplinks, and the at least two uplinks are communication links between the at least two transceiver points and the terminal. The communication interface is further configured to send a second message to the terminal on a first downlink, where the second message is used by the terminal to perform uplink communication on the first uplink. The first uplink is established on a first transceiver point, and the first downlink is established on a second transceiver point. The at least two transceiver points include the first transceiver point and the second transceiver point, or the at least two transceiver points include the first transceiver point and a third transceiver point, and the third transceiver point is a transceiver point corresponding to the second transceiver point.

The communication apparatus may be the access network device described in the embodiments of this application, may be a component that implements the foregoing method in the access network device, or may be a chip used in the access network device. The chip may be a system-on-a-chip (System-On-a-Chip, SOC), a baseband chip that has a communication function, or the like.

With reference to the third aspect, in a first possible implementation of the third aspect, the first message includes a random access preamble, and is used by the terminal to perform random access. The second message includes information about a time-frequency resource used for a radio resource control RRC connection setup request, where the time-frequency resource used for the RRC connection setup request belongs to a first time-frequency resource, and the first time-frequency resource is a time-frequency resource configured for the first transceiver point.

With reference to the first possible implementation of the third aspect, in a second possible implementation of the third aspect, the communication interface is specifically configured to receive, on the first uplink, the RRC connection setup request sent by the terminal by using the time-frequency resource used for the RRC connection setup request.

With reference to the third aspect, in a third possible implementation of the third aspect, the first message includes a sounding reference signal SRS. The second message includes information about a time-frequency resource used for a physical uplink shared channel, where the time-frequency resource used for the physical uplink shared channel belongs to a first time-frequency resource, and the first time-frequency resource is a time-frequency resource configured for the first transceiver point.

With reference to the third possible implementation of the third aspect, in a fourth possible implementation of the third aspect, the communication interface is specifically configured to receive, on the first uplink, the physical uplink shared channel sent by the terminal by using the time-frequency resource used for the physical uplink shared channel.

With reference to the third aspect, in a fifth possible implementation of the third aspect, the first message includes an SRS. The second message includes a random access preamble, information about a time-frequency resource used for the random access preamble, and random access response beam information, where the time-frequency resource used for the random access preamble belongs to a first time-frequency resource, the first time-frequency resource is a time-frequency resource configured for the first transceiver point, and the random access response beam information is used to indicate a beam for sending a random access response.

With reference to the fifth possible implementation of the third aspect, in a sixth possible implementation of the third aspect, the communication interface is specifically configured to receive, on the first uplink, the random access preamble sent by the terminal by using the time-frequency resource used for the random access preamble.

With reference to the sixth possible implementation of the third aspect, in a seventh possible implementation of the third aspect, the time-frequency resource used for the random access preamble is used to indicate to perform downlink communication with the terminal on the first downlink.

With reference to any one of the fifth to the seventh possible implementations of the third aspect, in an eighth possible implementation of the third aspect, the communication interface is further configured to receive the random access response beam information sent by the terminal; or the processor is further configured to determine the random access response beam information based on a downlink traffic beam of the terminal.

According to a fourth aspect, a computer-readable storage medium is disclosed. The computer-readable storage medium includes instructions. When the instructions are run on a computer, the computer is enabled to perform the communication method according to any one of the first aspect and the possible implementations of the first aspect. According to a fifth aspect, a computer program product is disclosed. The computer program product includes instructions. When the instructions are run on a computer, the computer is enabled to perform the communication method according to any one of the first aspect and the possible implementations of the first aspect.

According to a sixth aspect, a wireless communication apparatus is disclosed. The wireless communication apparatus stores instructions. When the wireless communication apparatus runs on the apparatus according to the second aspect or the third aspect, the apparatus is enabled to perform the communication method according to any one of the first aspect and the possible implementations of the first aspect. The wireless communication apparatus is a chip.

According to a seventh aspect, a communication system is disclosed. The communication system includes an access network device and a terminal. The terminal is configured to send a first message to the access network device.

The access network device may receive the first message by using at least two transceiver points, measure at least two uplinks based on the first message received by the at least two transceiver points, and determine a first uplink based on obtained measurement results. The access network device may send a second message to the terminal on a first downlink, where the second message is used by the terminal to perform uplink communication on the first uplink. The first uplink is an uplink with an optimal measurement result in the at least two uplinks, and the at least two uplinks are communication links between the at least two transceiver points and the terminal.

For example, the at least two transceiver points include a first transceiver point and a second transceiver point, where the first uplink is established on the first transceiver point, and the first downlink is established on the second transceiver point; or
the at least two transceiver points include a first transceiver point and a third transceiver point, where the first uplink is established on the first transceiver point, the first downlink is established on a second transceiver point, and the third transceiver point is a transceiver point corresponding to the second transceiver point.

### BRIEF DESCRIPTION OF DRAWINGS

FIG. 1 is a diagram of an architecture of a communication system according to an embodiment of this application;
FIG. 2 is a schematic diagram of a cell according to an embodiment of this application;
FIG. 3 is a block diagram of a communication apparatus according to an embodiment of this application;
FIG. 4 is a schematic flowchart of a communication method according to an embodiment of this application;
FIG. 5 is another schematic flowchart of a communication method according to an embodiment of this application, that is not according to the claimed invention;
FIG. 6 is another schematic flowchart of a communication method according to an embodiment of this application, that is not according to the claimed invention;
FIG. 7 is another schematic flowchart of a communication method according to an embodiment of this application;
FIG. 8 is another block diagram of a communication apparatus according to an embodiment of this application; and
FIG. 9 is another block diagram of a communication apparatus according to an embodiment of this application.

### DESCRIPTION OF EMBODIMENTS

The following describes the technical solutions in this application with reference to the accompanying drawings.

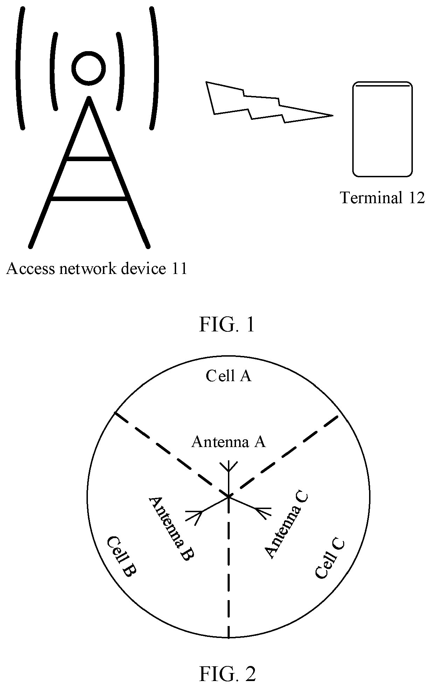

Embodiments of this application provide a communication system. The communication system includes an access network device and at least one terminal, and the at least one terminal may perform wireless communication with the access network device. FIG. 1 is a schematic diagram of the communication system according to an embodiment of this application. As shown in FIG. 1, the access network device includes an access network device 11, the at least one terminal includes a terminal 12, and the access network device 11 and the terminal 12 may perform wireless communication. It should be noted that the access network device and the terminal included in the communication system shown in FIG. 1 are merely examples. In this embodiment of this application, a type and a quantity of network elements included in the communication system, and a connection relationship between the network elements are not limited thereto.

The communication system in the embodiments of this application may be a communication system supporting a fourth generation (fourth generation, 4G) access technology, for example, a long term evolution (long term evolution, LTE) access technology. Alternatively, the communication system may be a communication system supporting a fifth generation (fifth generation, 5G) access technology, for example, a new radio (new radio, NR) access technology. Alternatively, the communication system may be a communication system supporting a third generation (third generation, 3G) access technology, for example, a universal mobile telecommunications system (universal mobile telecommunications system, UMTS) access technology. Alternatively, the communication system may be a communication system supporting a plurality of wireless technologies, for example, a communication system supporting an LTE technology and an NR technology. In addition, the communication system is also applicable to a future-oriented communication technology.

The access network device in the embodiments of this application may be a device that is on an access network side and that is configured to support a terminal in accessing a communication system, for example, may be a base transceiver station (base transceiver station, BTS) or a base station controller (base station controller, BSC) in a communication system supporting a 2G access technology, a NodeB (NodeB) or a radio network controller (radio network controller, RNC) in a communication system supporting a 3G access technology, an evolved NodeB (evolved NodeB, eNB) in a communication system supporting a 4G access technology, or a next generation NodeB (next generation NodeB, gNB), a transmission reception point (transmission reception point, TRP), a relay node (relay node), or an access point (access point, AP) in a communication system supporting a 5G access technology.

The terminal in the embodiments of this application may be a device that provides a user with voice or data connectivity. For example, the terminal may also be referred to as user equipment (user equipment, UE), a mobile station (mobile station), a subscriber unit (subscriber unit), a station (station), or terminal equipment (terminal equipment, TE). The terminal may be a cellular phone (cellular phone), a personal digital assistant (personal digital assistant, PDA), a wireless modem (modem), a handheld (handheld) device, a laptop computer (laptop computer), a cordless phone (cordless phone), a wireless local loop (wireless local loop, WLL) station, a tablet computer (pad), or the like. With development of wireless communication technologies, a device that can access a communication system, a device that can communicate with a network side in a communication system, or a device that can communicate with another object by using a communication system may be the terminal in the embodiments of this application, for example, a terminal and a vehicle in intelligent transportation, a household device in a smart household, an electricity meter reading instrument in a smart grid, a voltage monitoring instrument, an environment monitoring instrument, a video surveillance instrument in an intelligent security network, or a cash register. In the embodiments of this application, a terminal may communicate with an access network device, for example, the access network device 11. First, terms used in the embodiments of this application are explained and described.

### (1) Transceiver point

The transceiver point described in the embodiments of this application may be considered as a TRP (transmission reception point), and the TRP may also be referred to as a TRxP. Different transceiver points have different coverage. In a possible implementation, the transceiver point may be an antenna of a base station. Different antennas have different coverage, and different antennas may be considered as different transceiver points.

In another possible implementation, the transceiver point may alternatively be an antenna element of a multi-beam antenna of a base station. Different antenna elements have different coverage, and different antenna elements may be considered as different transceiver points.

It should be noted that time-frequency resources of different transceiver points may be different, or a same time-frequency resource is allocated to different transceiver points, and the time-frequency resource is reused by the different transceiver points.

### (2) Cell

Using a base station as an example, the cell may also be referred to as a serving cell of the base station. Generally, coverage of a transceiver point of the base station may be considered as a cell of the base station. For example, refer to FIG. 2. An example in which a transceiver point is an antenna is used. Coverage of an antenna A of the base station is a cell A, coverage of an antenna B of the base station is a cell B, and coverage of an antenna C of the base station is a cell C.

### (3) Uplink

The uplink (uplink, UL) is a link for performing uplink communication between a terminal and an access network device, that is, the terminal may send information to the access network device on the uplink. The uplink is determined by an antenna of the terminal and a transceiver point of the access network device. For example, a base station receives, by using a transceiver point A, uplink information sent by the terminal, that is, the uplink of the terminal is a radio channel between the transceiver point A and the antenna of the terminal.

### (4) Optimal uplink

The optimal uplink is an uplink with optimal channel quality in all uplinks. A terminal usually performs uplink communication with an access network device on the optimal uplink.

For example, refer to FIG. 2. It is assumed that the terminal device has only one antenna that may be used to send and receive information. A transceiver point of a base station has three antennas, A, B, and C that are used to send and receive information. When the terminal sends information by using the antenna, if the base station receives, by using the antenna A, the information sent by the terminal, a radio channel between the antenna of the terminal and the antenna A is an uplink, and the uplink is denoted as an uplink 1. If the base station receives, by using the antenna B, the information sent by the terminal, a radio channel between the antenna of the terminal and the antenna B is an uplink, and the uplink is denoted as an uplink 2. If the base station receives, by using the antenna C, the information sent by the terminal, a radio channel between the antenna of the terminal and the antenna C is an uplink, and the uplink is denoted as an uplink 3. In the uplink 1, the uplink 2, and the uplink 3, an uplink with optimal channel quality is the optimal uplink.

### (5) Downlink

The downlink (downlink, DL) is a link for performing downlink communication between an access network device and a terminal, that is, the access network device may send information to the terminal on the downlink. The downlink is determined by a transceiver point of the access network device and an antenna of the terminal. For example, a base station sends downlink information to the terminal by using a transceiver point B, that is, the downlink of the terminal is a radio channel between the transceiver point B and the antenna of the terminal.

### (6) Optimal downlink

The optimal downlink is a downlink with optimal channel quality in all downlinks. A terminal usually performs downlink communication with an access network device on the optimal downlink.

For example, refer to FIG. 2. It is assumed that the terminal device has only one antenna that may be used to send and receive information. A transceiver point of a base station has three antennas, A, B, and C that are used to send and receive information. If the base station sends information to the terminal by using the antenna A, a radio channel between the antenna of the terminal and the antenna A is a downlink, and the downlink is denoted as a downlink 1. If the base station sends information to the terminal by using the antenna B, a radio channel between the antenna of the terminal and the antenna B is a downlink, and the downlink is denoted as a downlink 2. If the base station sends information to the terminal by using the antenna C, a radio channel between the antenna of the terminal and the antenna C is a downlink, and the downlink is denoted as a downlink 3. In the downlink 1, the downlink 2, and the downlink 3, a downlink with optimal channel quality is the optimal downlink of the terminal.

### (7) Correspondence between links

In a possible implementation, a downlink and an uplink corresponding to the downlink are established on a same transceiver point (for example, an antenna of a base station). It may be understood that the uplink and the downlink that are established on the same transceiver point correspond to a same cell. For example, refer to FIG. 2. When the base station receives uplink information by using the antenna A, the uplink 1 is an uplink of the terminal, and a downlink corresponding to the uplink 1 is also established on the antenna A, that is, the downlink corresponding to the uplink 1 is the downlink 1. The uplink 1 and the downlink 1 correspond to a cell A. Similarly, when the base station sends downlink information by using the antenna A, the downlink 1 is a downlink of the terminal, and an uplink corresponding to the downlink 1 is also established on the antenna A, that is, the uplink corresponding to the downlink 1 is the uplink 1.

In another possible implementation, a communication system supports uplink and downlink decoupling, the downlink and the uplink corresponding to the downlink are established on two different transceiver points, and the two different transceiver points may be referred to as corresponding transceiver points. For example, in a supplementary uplink (supplementary uplink, SUL) scenario, a 3.5 GHz downlink and a 1.8 GHz uplink (SUL) are established on different transceiver points. It may be considered that an uplink corresponding to the 3.5 GHz downlink is the 1.8 GHz uplink. A transceiver point corresponding to a 3.5 GHz transceiver point is a 1.8 GHz transceiver point, and a transceiver point corresponding to the 1.8 GHz transceiver point is the 3.5 GHz transceiver point.

Currently, in a conventional cellular mobile communication system such as a second generation (second generation, 2G) communication system, a third generation (3rd generation, 3G) communication system, or a fourth generation (4th generation, 4G) communication system, a base station may determine an optimal downlink based on a downlink measurement result of a terminal, and configure an uplink corresponding to the optimal downlink as an optimal uplink. The base station communicates with the terminal on the optimal downlink and the optimal uplink.

However, in an actual network, path losses, interference, load, and the like of an uplink and a downlink are inconsistent, and channel quality of the uplink corresponding to the optimal downlink may not be optimal. Particularly, in a 5G communication system, because an uplink and a downlink are decoupled from each other, spectrums and antennas of the uplink and the downlink are inconsistent. If the uplink corresponding to the optimal downlink is simply used as the optimal uplink of the terminal, it cannot be ensured that the terminal always works on an uplink with optimal channel quality, and uplink communication performance is affected.

The embodiments of this application provide a communication method. A base station may receive a first message from a terminal by using at least two transceiver points, measure at least two uplinks based on the first message received by the at least two transceiver points, reselect an optimal uplink for the terminal based on obtained measurement results, and then perform uplink communication with the terminal on the reselected optimal uplink, to receive uplink information sent by the terminal. It can be learned that in the embodiments of this application, an optimal uplink no longer depends on a downlink measurement result of the UE. In an uplink and downlink decoupling scenario, the base station determines, through uplink measurement, an uplink with optimal channel quality as the optimal uplink of the terminal. The uplink may not be an uplink corresponding to an optimal downlink. In a subsequent procedure, the UE may perform uplink communication on the uplink with optimal channel quality, and perform downlink communication on a downlink with optimal channel quality, to ensure performance of a communication system. In addition, the base station does not need to maintain a plurality of uplinks, so that resource overheads on a network side are reduced.

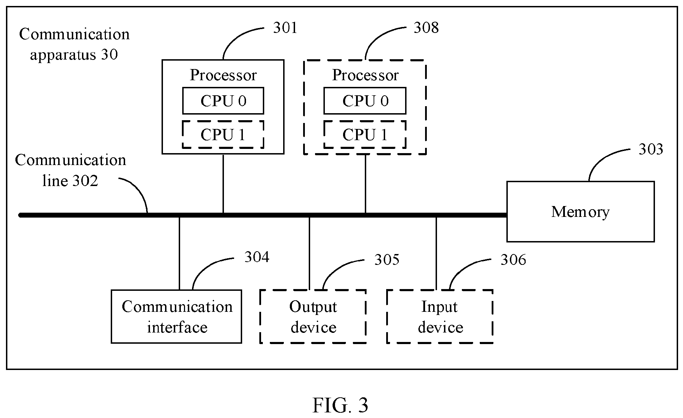

An access mobility management function network element, a radio access network device, or a terminal apparatus in the embodiments of this application may be implemented by using a communication apparatus 30 in FIG. 3. FIG. 3 is a schematic diagram of a hardware structure of the communication apparatus 30 according to an embodiment of this application. The communication apparatus 30 includes a processor 301, a communication line 302, a memory 303, and at least one communication interface (where descriptions are provided in FIG. 3 merely by using an example in which the communication apparatus 30 includes a communication interface 304).

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 302 may include a path for transmitting information between the foregoing components.

The communication interface 304 is configured to communicate with another device or a communication network, for example, the Ethernet, a radio access network (radio access network, RAN), or a wireless local area network (wireless local area network, WLAN) by using any apparatus such as a transceiver.

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and be connected to the processor through the communication line 302. The memory may alternatively be integrated with the processor.

The memory 303 is configured to store computer-executable instructions for executing the solutions in this application, and the processor 301 controls execution of the computer-executable instructions. The processor 301 is configured to execute the computer-executable instructions stored in the memory 303, to implement the communication method provided in the following embodiments of this application.

Optionally, the computer-executable instructions in the embodiments of this application may also be referred to as application program code. This is not specifically limited in the embodiments of this application.

During specific implementation, in an embodiment, the processor 301 may include one or more CPUs, for example, a CPU 0 and a CPU 1 in FIG. 3.

During specific implementation, in an embodiment, the communication apparatus 30 may include a plurality of processors, for example, the processor 301 and a processor 308 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensing device.

The foregoing communication apparatus 30 may be a general-purpose device or a dedicated device. During specific implementation, the communication apparatus 30 may be a desktop computer, a portable computer, a network server, a palmtop computer (personal digital assistant, PDA), a mobile phone, a tablet computer, a wireless terminal apparatus, an embedded device, or a device having a structure similar to that in FIG. 3. A type of the communication apparatus 30 is not limited in the embodiments of this application.

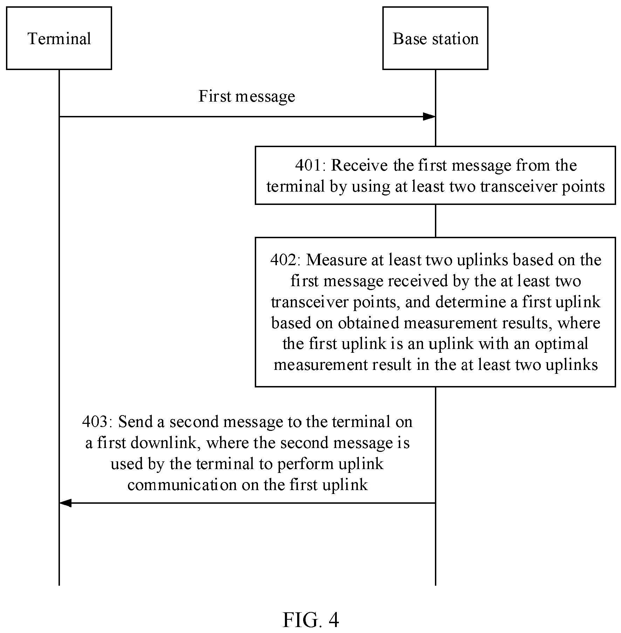

An embodiment of this application provides a communication method. The method is applied to the communication system shown in FIG. 1. As shown in FIG. 4, the method includes the following steps.

401: Receive a first message from a terminal by using at least two transceiver points.

It should be noted that this embodiment of this application may be performed by an access network device, for example, a base station, may be performed by a component that implements the foregoing method in the access network device, or may be performed by a chip used in the access network device. The chip may be a system-on-a-chip (System-On-a-Chip, SOC), a baseband chip that has a communication function, or the like.

During specific implementation, the terminal sends the first message, and the base station may receive the first message by using different transceiver points. Channel quality of links between different transceiver points and the terminal may be different, that is, channel quality of uplinks established on the different transceiver points may be different. The base station may receive the first message by using a plurality of transceiver points, so that channel quality of uplinks established on the different transceiver points may be determined based on the first message received by the different transceiver points. It should be noted that the at least two transceiver points include a transceiver point corresponding to a current optimal uplink. In this way, the base station can compare signal strengths of the first message received by a plurality of different transceiver points, and select an uplink whose channel quality is better than that of the current optimal uplink.

For example, the base station determines, based on a downlink measurement result of the terminal, that an optimal uplink is an uplink corresponding to a downlink 1 (that is, a first downlink described in the embodiments of this application), and the downlink 1 is established on a transceiver point A of the base station. The current optimal uplink is an uplink 1 corresponding to the downlink 1, and the uplink 1 may be established on the transceiver point A of the base station. In step 401, the transceiver point A also needs to receive the first message of the terminal, so that the base station selects, based on measurement results corresponding to the plurality of transceiver points, an uplink whose channel quality is better than that of the uplink 1 as the optimal uplink of the UE.

Alternatively, in an SUL scenario, the base station determines, based on a downlink measurement result of the terminal, that an optimal uplink is an uplink corresponding to a downlink 1, and the downlink 1 is established on a transceiver point A1 of the base station. The current optimal uplink is an uplink corresponding to the downlink 1, that is, an SUL established on a transceiver point A2. In step 401, the transceiver point A2 needs to receive the first message of the terminal, so that the base station selects, based on measurement results corresponding to the plurality of transceiver points, an uplink whose channel quality is better than that of the SUL as the optimal uplink of the UE.

In addition, the first message sent by the terminal may have the following three possible implementations.

In the first implementation, when the terminal is in a random access process, the base station may measure an uplink message sent by the terminal, and reselect an optimal uplink for the terminal. Specifically, the first message may be an Msg1. For example, the first message includes a random access preamble, and the first message is used by the terminal to perform random access.

In the second implementation, when the terminal is in a connected state, the base station may measure an uplink message sent by the terminal, reselect an optimal uplink for the terminal, and perform uplink scheduling by using a resource used for the new optimal uplink. The terminal does not sense an optimal uplink change. Specifically, the first message may be a sounding reference signal (sounding reference signal, SRS).

In the third implementation, when the terminal is in a connected state, the base station may measure an uplink message sent by the terminal, reselect an optimal uplink for the terminal, and send a contention-free random access indication to the terminal, to indicate the terminal to change the optimal uplink. The terminal can sense an optimal uplink change. Specifically, the first message may be a sounding reference signal (sounding reference signal, SRS).

402: Measure at least two uplinks based on the first message received by the at least two transceiver points, and determine a first uplink based on obtained measurement results, where the first uplink is an uplink with an optimal measurement result in the at least two uplinks.

For example, the at least two uplinks are communication links between the at least two transceiver points and the terminal. Specifically, one uplink is established between one transceiver point of the base station and the terminal, and at least two different uplinks may be established on the at least two transceiver points. Channel quality of an uplink established on a transceiver point may be obtained by measuring a first message received by the transceiver point. Channel quality of the uplink established on each transceiver point may be obtained by measuring the first message received by each transceiver point. Further, an uplink with optimal channel quality (that is, the optimal measurement result) may be determined as the optimal uplink.

In a possible implementation, the measuring the first message received by the transceiver point may be measuring an uplink signal to interference plus noise ratio (signal to interference plus noise ratio, SINR), and determining the uplink with optimal channel quality based on the obtained SINR. For example, in all transceiver points that receive the first message, an SINR obtained by measuring the first message received by the transceiver point A is the largest, and it may be considered that channel quality of an uplink established on the transceiver point A is optimal. Further, it may be determined that the uplink established on the transceiver point A is the new optimal uplink.

403: Send a second message to the terminal on the first downlink, where the second message is used by the terminal to perform uplink communication on the first uplink.

For example, the at least two transceiver points in this embodiment of this application include a first transceiver point and a second transceiver point, where the first uplink is established on the first transceiver point, and the first downlink is established on the second transceiver point.

Alternatively, the at least two transceiver points in this embodiment of this application include a first transceiver point and a third transceiver point, where the first uplink is established on the first transceiver point, the first downlink is established on a second transceiver point, and the third transceiver point is a transceiver point corresponding to the second transceiver point.

Specifically, in an uplink and downlink coupling scenario, a downlink and an uplink corresponding to the downlink may be established on a same transceiver point. The current optimal downlink (the first downlink) is established on the second transceiver point, and the current optimal uplink is also established on the second transceiver point. To compare measurement results corresponding to different transceiver points, an uplink whose channel quality is better than that of the current optimal uplink is selected. In step 401, the second transceiver point may receive the first message sent by the terminal device, that is, the at least two transceiver points include the first transceiver point and the second transceiver point.

For example, the base station has two transceiver points A and B. The base station determines, based on the downlink measurement result of the terminal, that the downlink 1 established on the transceiver point A (the second transceiver point) is the optimal downlink (the first downlink), and that the uplink 1 established on the transceiver point A is the current optimal uplink. In step 401, both the transceiver point A and the transceiver point B receive the first message sent by the terminal. In step 402, the base station determines that the new optimal uplink is an uplink 2 (the first uplink) established on the transceiver point B (the first transceiver point). In a subsequent procedure, the base station receives, on the uplink 2, the uplink message sent by the terminal.

In addition, in an uplink and downlink decoupling scenario, a downlink and an uplink corresponding to the downlink are established on different transceiver points. The current optimal downlink (the first downlink) is established on the second transceiver point, and the current optimal uplink is established on a different transceiver point, for example, the third transceiver point. To compare measurement results corresponding to different transceiver points, an uplink whose channel quality is better than that of the current optimal uplink is selected. In step 401, the third transceiver point may receive the first message sent by the terminal device, that is, the at least two transceiver points include the first transceiver point and the third transceiver point.

For example, in an SUL scenario, it is assumed that the base station has four transceiver points A1, A2, B1, and B2. The base station determines, based on the downlink measurement result of the terminal, that the downlink 1 (the first downlink) established on the transceiver point A1 (the second transceiver point) is the optimal downlink, and that the current optimal uplink is an SUL 1 established on the transceiver point A2 (the third transceiver point). In step 401, transceiver points A2, B1, and B2 all receive the first message sent by the terminal. In step 402, the base station determines that the new optimal uplink is an SUL 2 (first uplink) established on the transceiver point B2 (the first transceiver point). In a subsequent procedure, the base station receives, on the SUL 2, the uplink message sent by the terminal.

During specific implementation, the base station may determine the optimal downlink in the following manner. The base station sends a downlink reference message to the terminal by using a plurality of different transceiver points, and the terminal measures the downlink reference message from the different transceiver points to obtain measurement results corresponding to different downlinks. The terminal may further report the obtained measurement results to the base station, and the base station determines a downlink with an optimal measurement result as the optimal downlink. The first downlink in this embodiment of this application may be the optimal downlink. In other words, the base station and the terminal still perform downlink communication on the previously determined optimal downlink, and perform uplink communication on a newly determined optimal uplink.

For the foregoing three different implementations of the first message, there are also three different possible implementations of the second message.

In the first implementation, when the terminal is in the random access process, the base station may measure the uplink message sent by the terminal, and reselect the optimal uplink for the terminal. The first message may be an Msg1, and includes a random access preamble. The second message may be an Msg2, and is a random access response. The Msg2 includes information about a time-frequency resource allocated to an Msg3. The time-frequency resource allocated to the Msg3 may be a time-frequency resource used for a radio resource control (radio resource control, RRC) connection setup request.

That is, the second message includes information about the time-frequency resource used for the RRC connection setup request. The time-frequency resource used for the RRC connection setup request belongs to a first time-frequency resource, and the first time-frequency resource is a time-frequency resource configured for the first transceiver point. It can be learned that in the method provided in this embodiment of this application, the optimal uplink may be reselected for the terminal, and the terminal may reply to the base station with the random access response on the reselected optimal uplink. This helps improve communication performance. The optimal uplink is not necessarily an uplink corresponding to the optimal downlink. In this way, uplink and downlink decoupling is implemented, and the terminal can communicate with the base station on an uplink and a downlink that are with optimal channel quality.

Optionally, the base station may further receive, on the first uplink, the RRC connection setup request sent by the terminal by using the time-frequency resource used for the RRC connection setup request.

In the second implementation, when the terminal is in the connected state, the base station may measure the uplink message (for example, an SRS) sent by the terminal, reselect the optimal uplink for the terminal, and perform uplink scheduling by using the resource used for the new optimal uplink. The second message may be a physical downlink control channel (physical downlink control channel, PDCCH), and is used to schedule a physical uplink shared channel (physical uplink shared channel, PUSCH).

Specifically, the second message may include information about a time-frequency resource used for the physical uplink shared channel, where the time-frequency resource used for the physical uplink shared channel belongs to a first time-frequency resource, and the first time-frequency resource is a time-frequency resource configured for the first transceiver point. It can be learned that in the method provided in this embodiment of this application, the optimal uplink may be reselected for the terminal, and the terminal may send the physical uplink shared channel to the base station on the reselected optimal uplink. This helps improve communication performance. The optimal uplink is not necessarily an uplink corresponding to the optimal downlink. In this way, uplink and downlink decoupling is implemented, and the terminal can communicate with the base station on an uplink and a downlink that are with optimal channel quality.

Optionally, the base station may further receive, on the first uplink, the physical uplink shared channel sent by the terminal by using the time-frequency resource used for the physical uplink shared channel.

In the third implementation, when the terminal is in the connected state, the base station may measure the SRS sent by the terminal, reselect the optimal uplink for the terminal, and send the contention-free random access indication to the terminal, to indicate the terminal to change the optimal uplink. The contention-free random access indication includes a random access preamble, information about a time-frequency resource used for the random access preamble, and random access response beam information. The random access response beam information is used to indicate a beam for sending a random access response.

Specifically, the second message in this embodiment of this application may be the contention-free random access indication. The time-frequency resource used for the random access preamble belongs to a first time-frequency resource, and the first time-frequency resource is a time-frequency resource configured for the first transceiver point. It can be learned that in the method provided in this embodiment of this application, the optimal uplink may be reselected for the terminal, and the terminal may send the random access preamble to the base station on the reselected optimal uplink, access the new optimal uplink, and subsequently communicate with the access network device on the new optimal uplink. This helps improve communication performance. The optimal uplink is not necessarily an uplink corresponding to the optimal downlink. In this way, uplink and downlink decoupling is implemented, and the terminal can communicate with the base station on an uplink and a downlink that are with optimal channel quality.

Optionally, the base station may further receive, on the first uplink, the random access preamble sent by the terminal by using the time-frequency resource used for the random access preamble.

Optionally, the time-frequency resource used for the random access preamble is used to indicate to perform downlink communication with the terminal on the first downlink. To be specific, the base station may allocate, based on the first time-frequency resource (that is, the time-frequency resource configured for the first transceiver point), a specified time-frequency resource to the random access preamble. Once the base station identifies that the time-frequency resource used by the terminal to send the random access preamble is the specified time-frequency resource, the base station determines that the optimal uplink of the terminal may be changed. Because channel quality of the uplink and channel quality of the downlink are different, a downlink corresponding to the current optimal uplink of the terminal may not necessarily be the downlink with optimal channel quality, and the base station still performs downlink communication with the terminal on the first downlink.

Optionally, the base station may obtain the random access response beam information in the following two manners. In the first manner, the base station may indicate the terminal to determine the random access response beam information. After determining the random access response beam information, the terminal may report the random access response beam information to the base station. The base station receives the random access response beam information sent by the terminal, to obtain the random access response beam information.

In the second manner, the base station may determine the random access response beam information based on the downlink traffic beam of the terminal. Specifically, the base station simulates a radiation direction of the downlink traffic beam based on a weighted value of the downlink traffic beam on each antenna port, and then determines an static shared beam (static shared beam, SSB) that is in SSB beams and that has a highest matching degree with the downlink traffic beam as a random access response beam.

It should be noted that the optimal uplink determined by the base station based on measurement results of the first message may also be an uplink corresponding to the first downlink. For example, the base station determines, based on the downlink measurement result reported by the terminal, that the optimal downlink is a downlink 2 established on the transceiver point B, and measures the first message received by the transceiver points A, B, and C. A strength of the first message received by the transceiver point B is the highest, that is, channel quality of the uplink 2 established on the transceiver point B is optimal. Therefore, the optimal uplink selected by the base station for the terminal is an uplink corresponding to the downlink 2, that is, the uplink 2.

In addition, in the method shown in FIG. 4, the at least two uplinks are established on different transceiver points of a same base station. In a possible implementation, the at least two uplinks may alternatively be established on transceiver points of different base stations. For example, an optimal downlink between a base station 1 and the terminal is established on a transceiver point A of the base station 1. The base station 1 receives, by using the transceiver points A and B, the first message sent by the terminal, and a base station 2 receives, by using a transceiver point E, the first message sent by the terminal. The base station 1 measures the first message received by the transceiver point A and B, and the base station 2 measures the first message received by the transceiver point E, and sends measurement results to the base station 1. The base station 1 compares measurement results corresponding to the transceiver point A, B, and E. If a signal strength of the first message received by the transceiver point E is the highest, it is determined that the optimal uplink of the terminal is an uplink established on the transceiver point E. The base station 1 may further indicate the base station 2 to allocate a time-frequency resource to the transceiver point E, so that the terminal performs uplink communication.

The following describes a communication method provided in an embodiment of this application by using a 5G communication system as an example. In the 5G communication system, uplink and downlink decoupling (UL and DL Decoupling) is supported. A network side selects, based on a downlink measurement result of a terminal, a DL with optimal channel quality as an optimal downlink for the UE, selects an SUL as an optimal uplink for the UE, and notifies the UE of information about the SUL by using a broadcast message. The SUL is an uplink corresponding to the DL with optimal channel quality. Actually, a frequency and an antenna of the SUL used as the optimal uplink are inconsistent with a frequency and an antenna of the optimal downlink. As a result, channel quality of the SUL may be inconsistent with channel quality of the optimal downlink. Uplink and downlink communication is performed based on the SUL and the optimal downlink, and communication performance is very likely to be affected.

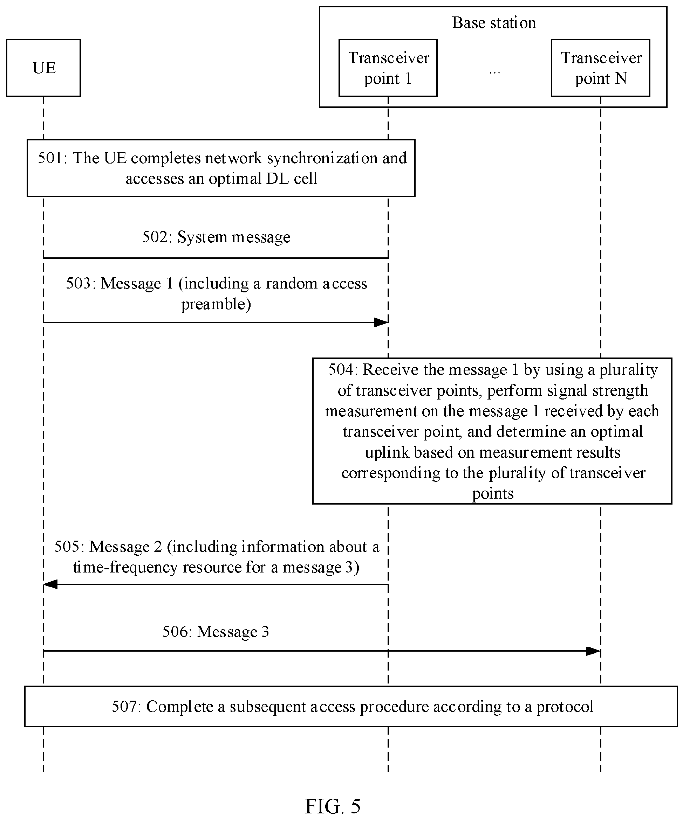

An embodiment of this application provides a communication method, to select an optimal uplink for UE in an initial random access process. Specifically, refer to FIG. 5. The method includes the following steps.

501: UE accesses an optimal DL cell.

During specific implementation, an optimal downlink is a downlink that is determined by a base station based on a downlink measurement result of the terminal and that is with optimal channel quality, and the optimal DL cell is a coverage cell of a transceiver point on which the optimal downlink is established. For example, in this embodiment of this application, the base station has N transceiver points, including a transceiver point 1, a transceiver point 2, ..., and a transceiver point N. Assuming that the optimal downlink is established on the transceiver point 1, a coverage cell of the transceiver point 1 is the optimal DL cell.

In step 501, the UE accesses the coverage cell of the transceiver point 1. After accessing the optimal DL cell, the UE may perform downlink communication with the base station on the optimal downlink, and receive downlink information sent by the base station.

502: The UE receives, on the optimal downlink, a system message broadcast by the base station.

It should be noted that when the base station performs downlink communication with the UE on the optimal downlink, that is, the base station broadcasts the system message by using the transceiver point 1, the UE may receive, on the optimal downlink, the system message broadcast by the base station.

In addition, when a plurality of terminals all need to send data to the base station, a conflict may occur between the different terminals. Therefore, a time point for sending uplink data by different terminals may be controlled through contention-based random access between the terminals, to avoid a conflict between terminals.

Specifically, the base station broadcasts the system message. The system message includes time-frequency information of a physical random access channel (physical random access channel, PRACH), a root sequence index number, a cyclic shift (cyclic shift), and the like. For example, the time-frequency information of the PRACH is used by the terminal to send the PRACH, and the PRACH is a channel carrying a random access preamble. The root sequence index number is used by the terminal to determine the random access preamble (preamble for short).

503: The UE sends an Msg1 (a message 1) based on the system message, where the Msg1 includes the preamble (the random access preamble).

During specific implementation, the UE may send the Msg1 to the base station by using the PRACH. The Msg1 is the first message in the embodiments of this application.

In addition, the UE obtains the root sequence number from the system message, determines a preamble based on the root sequence number, and sends the preamble on a time-frequency resource corresponding to the time-frequency information of the PRACH, to initiate a random access process.

504: The base station receives the Msg1 by using a plurality of transceiver points, performs signal strength measurement on the Msg1 received by each transceiver point, and determines the optimal uplink based on measurement results corresponding to the plurality of transceiver points.

During specific implementation, information synchronization is performed between an optimal uplink cell and an optimal downlink cell of the base station, to allocate a time-frequency resource to a Msg3 based on a resource used for the optimal uplink. For example, the base station obtains the downlink measurement result of the UE, and determines that the optimal downlink is a downlink 1. Refer to FIG. 2. The downlink 1 is established on the antenna 1 of the base station, and is a downlink corresponding to the cell A. The cell A receives measurement results sent by other cells, summarizes measurement results of all cells, and determines an optimal uplink. For example, both the cell B and the cell C shown in FIG. 2 send measurement results to the cell A. If the cell A determines that a measurement result reported by the cell B is optimal, the cell A determines that the uplink 2 corresponding to the cell B is the optimal uplink. The cell A may notify the cell B that a newly determined optimal uplink is the uplink 2, and the cell B may send information about a time-frequency resource used for the optimal uplink (that is, a time-frequency resource configured for a first transceiver point) to the cell A. The cell A may determine the time-frequency resource for the Msg3 based on the time-frequency resource used for the optimal uplink, send a Msg2 to the UE on the downlink 1, and indicate information about the time-frequency resource for the Msg3 by using the Msg2.

It should be noted that the base station has a plurality of transceiver points, and an antenna of each transceiver point covers one cell. The base station receives the Msg1 by using the plurality of transceiver points, that is, receives, by using a plurality of cells, the Msg1 sent by the terminal. Because coverage of different transceiver points is different, channel quality of different uplinks is also different. Therefore, the base station may measure the Msg1 received by each transceiver point, to determine a transceiver point with an optimal measurement result. That is, a new optimal uplink is established on the transceiver point. The transceiver point with the optimal measurement result is a transceiver point with a highest measured signal strength.

For example, three cells of the base station are used as an example. The Msg1 received by the transceiver point 1 corresponding to the cell A is measured, and an obtained signal strength is 3 dB. The Msg1 received by the transceiver point 2 corresponding to the cell B is measured, and an obtained signal strength is 5 dB. The Msg1 received by the transceiver point 3 corresponding to the cell C is measured, and an obtained signal strength is 6 dB. The measured signal strength of the Msg1 received by the transceiver point 3 is the highest, that is, the optimal uplink is an uplink established on the transceiver point 3.

In this embodiment of this application, the optimal uplink determined by the base station based on an uplink measurement result and the optimal downlink may be established on a same transceiver point, or the optimal uplink and the optimal downlink may be established on different transceiver points. For example, refer FIG. 2. Assuming that the optimal downlink is established on the antenna 1 of the base station, the optimal uplink may be an uplink established on the antenna 1, or may be an uplink established on the antenna 2 or the antenna 3. This is not limited in this embodiment of this application, and the uplink measurement result is used for reference.

505: The base station sends the Msg2 (a message 2) to the UE on the optimal downlink.

The Msg2 may be a random access response message (random access response, RAR), and the Msg2 includes the information about the time-frequency resource for the Msg3. The Msg3 may be a radio resource control (radio resource control, RRC) connection setup request, or may be data (first scheduled UL transmission on UL-SCH) sent by the terminal by using an uplink shared channel for the first time. The data sent by the terminal by using the uplink shared channel for the first time may be considered as data initially transmitted by the terminal in the random access process. The Msg2 may be the second message described in the embodiments of this application.

It should be noted that the time-frequency resource occupied by the Msg3 belongs to a first time-frequency resource (a time-frequency resource allocated to the first transceiver point). The first transceiver point is a transceiver point on which the new optimal uplink is established. For example, in a related example of step 504, the first transceiver point is the transceiver point 3. It can be learned that in this embodiment of this application, the optimal uplink no longer depends on the downlink measurement result of the UE. In an uplink and downlink decoupling scenario, the base station determines an optimal uplink through uplink measurement, and the optimal uplink may not be an uplink corresponding to the optimal downlink. That is, the optimal uplink and the optimal downlink may be established on different transceiver points. The UE may perform uplink communication on an uplink with optimal channel quality, and perform downlink communication on a downlink with optimal channel quality, to ensure performance of a communication system.

506: The UE sends the Msg3 (a message 3) on the optimal uplink.

Assuming that the optimal uplink determined by the base station in step 504 is an uplink established on the transceiver point N, in step 506, the UE sends the Msg3 to the base station, and the base station receives the Msg3 from the terminal by using the transceiver point N. The Msg3 may be used to request the base station to establish an RRC connection for the UE.

507: Complete a subsequent access procedure according to a protocol.

For example, the base station sends an Msg4 to the UE, where the Msg4 may be an acknowledgment message of the RRC connection setup request.

In the method provided in this embodiment of this application, the base station detects random access information (the preamble) on a plurality of uplinks, summarizes measurement results of the plurality of uplinks, and determines the optimal uplink based on the measurement results. In an initial access scenario, the uplink with optimal channel quality may be selected for the UE, so that the UE can perform uplink communication on the uplink with optimal channel quality, and perform downlink communication on the downlink with optimal channel quality, to ensure the performance of the communication system.

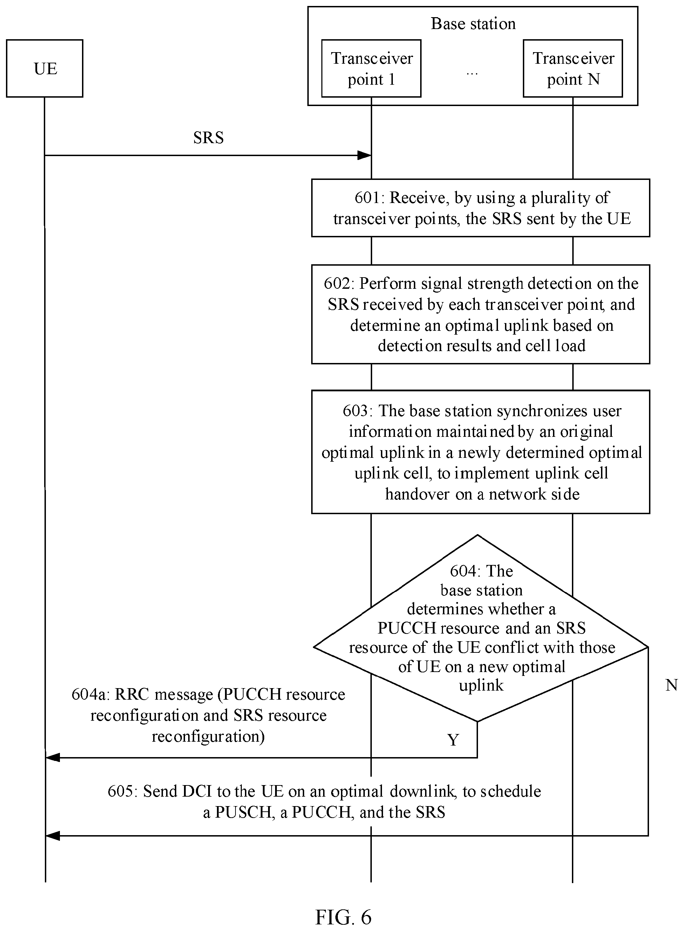

An embodiment of this application further provides a communication method, to select an optimal uplink for UE in a connected state. Specifically, refer to FIG. 6. The method includes the following steps.

601: A base station receives, by using a plurality of transceiver points, an SRS sent by UE.

During specific implementation, the plurality of transceiver points of the base station may simultaneously receive the SRS sent by the UE, and different uplinks are established on different transceiver points. The SRS may be the first message in the embodiments of this application.

602: The base station performs signal strength detection on the SRS received by each transceiver point, and determines an optimal uplink based on detection results and cell load.

Specifically, after the transceiver points receive the SRS, signal strength measurement is performed on the received SRS, and the optimal uplink is determined based on measurement results. Specifically, weighting coefficients of the signal strength and the cell load may be set, and an uplink with a maximum weighting result is determined as the optimal uplink. For example, a weighting result is determined based on a×X+b×Y. For example, X represents the signal strength, a is a weight coefficient of the signal strength, Y represents the cell load, and b is a weight coefficient of the cell load. The cell load is load of a cell corresponding to an uplink.

Refer to FIG. 2. The downlink 1 is established on the transceiver point 1 (for example, the antenna 1) of the base station, and is a downlink corresponding to the cell A. The transceiver point 1 receives weighting results sent by other cells, summarizes weighting results of all cells, and determines the optimal uplink. For example, both the transceiver point 2 and the transceiver point 3 of the base station send weighting results to the cell A, and the transceiver point 1 determines that a weighting result reported by the transceiver point 2 is optimal. In this way, it is determined that the uplink 2 corresponding to the transceiver point 2 is the optimal uplink.

603: The base station synchronizes user information maintained by an original optimal uplink in a newly determined optimal uplink cell, to implement uplink cell handover on a network side.

It should be noted that the user information includes a physical cell identifier (physical cell ID, PCI), a cell radio network temporary identifier (cell radio network temporary identifier, C-RNTI), L2 (Layer 2) scheduling information, and the like. For example, the base station obtains a downlink measurement result of the UE, and determines that an optimal downlink is the downlink 1. Refer to the example in step 602. The original optimal uplink is an uplink corresponding to the optimal downlink, that is, the uplink 1. User information maintained by the cell A may be sent to the cell B, so that the optimal uplink cell can be handed over to the cell B.

In addition, the optimal uplink corresponds to the optimal uplink cell, and the optimal uplink cell is determined if the optimal uplink is determined. It may be understood that, assuming that the optimal uplink is established on the transceiver point 2 (for example, the antenna 2 of the base station), the optimal uplink cell is a coverage cell of the antenna 2.

604: The base station determines whether a PUCCH resource and an SRS resource of the UE conflict with those of the UE on a new optimal uplink.

The UE on the new optimal uplink may be considered as UE under coverage of the new optimal uplink (the uplink cell). In addition, the base station may further receive, on the optimal uplink, a PUCCH resource and an SRS resource that are sent by another UE. If the PUCCH resource and the SRS resource of the UE conflict with the PUCCH resource and the SRS resource of the another UE, uplink messages between different UEs cause interference and network performance deteriorates. To avoid uplink interference between the different UEs, a PUCCH resource and an SRS resource may be reallocated to the UE.

That is, if the base station determines that a conflict exists, step 604a is performed to reconfigure the PUCCH resource and the SRS resource for the UE. If no conflict exists, step 604a is skipped, and step 605 is directly performed, that is, uplink scheduling is performed by using downlink control information (downlink control information, DCI). 604a: The base station sends an RRC message to the UE to reconfigure the PUCCH resource and the SRS resource. During specific implementation, the RRC message may include the PUCCH resource and the SRS resource that are reconfigured for the UE. In addition, the base station sends the RRC message to the UE on a previously determined optimal downlink. For example, the base station determines, based on the downlink measurement result of the UE, that the optimal downlink is the downlink 1 established on the transceiver point 1. In step 604a, the RRC message is sent to the UE by using the transceiver point 1.

605: The base station sends the DCI to the UE on the optimal downlink, to schedule a PUSCH, the PUCCH, and the SRS.

During specific implementation, the base station sends the DCI to the UE on the previously determined optimal downlink. For example, the base station determines, based on the downlink measurement result of the UE, that the optimal downlink is the downlink 1 established on the transceiver point 1. In step 605, the DCI is sent to the UE by using the transceiver point 1.

The base station sends the DCI to the UE, where the DCI indicates PUSCH time-frequency resource information, PUCCH time-frequency resource information, and SRS time-frequency resource information. The DCI may be the second message in the embodiments of this application. A PUSCH time-frequency resource belongs to a time-frequency resource configured for a first transceiver point. For example, the first transceiver point is a transceiver point on which a latest optimal uplink is established. Refer to the example in step 602. The optimal uplink is established on the transceiver point 2 of the base station.

In this embodiment of this application, the base station simultaneously receives and detects the SRS on the plurality of uplinks, and determines the optimal uplink based on factors such as the detected signal strength/the load. The base station delivers a scheduling result (the DCI) of the new optimal UL on the optimal downlink. The UE does not sense an uplink change. The base station performs uplink PUSCH transmission based on the DCI, and the base station performs uplink reception on the new optimal uplink. In the connected state, an uplink with optimal channel quality may be selected for the UE, so that the UE can perform uplink communication on the uplink with optimal channel quality, and perform downlink communication on a downlink with optimal channel quality, to ensure performance of a communication system.

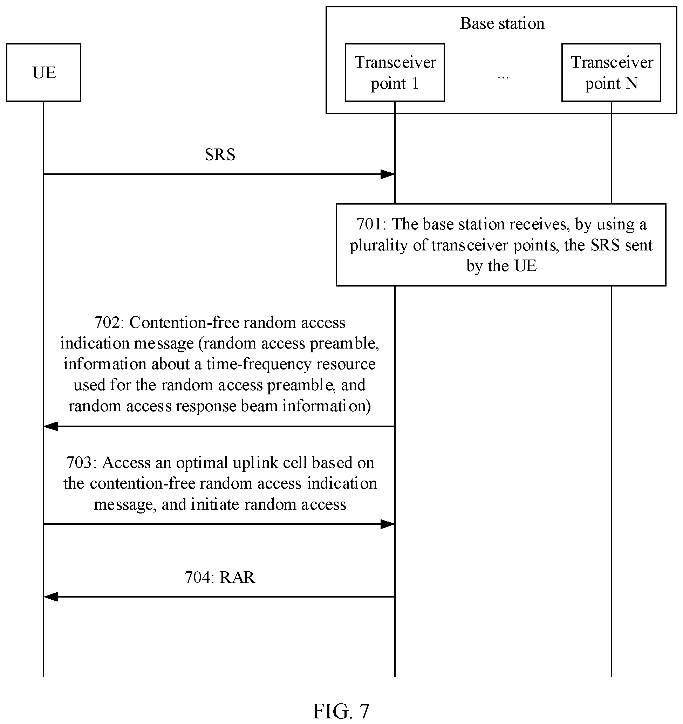

An embodiment of this application further provides a communication method, to select an optimal uplink for UE in a connected state. Specifically, refer to FIG. 7. The method includes the following steps.

701: A base station receives, by using a plurality of transceiver points, an SRS sent by the UE, performs signal strength detection on the SRS received by each transceiver point, and determines the optimal uplink based on detection results and cell load.

During specific implementation, the plurality of transceiver points of the base station may simultaneously receive the SRS sent by the UE, and different transceiver points are configured to establish different uplinks. The SRS may be the first message in the embodiments of this application.

For a specific implementation, refer to the descriptions of step 602. Details are not described herein again.

702: After obtaining a preamble resource and an RAR beam, the base station delivers a contention-free random access indication message to the UE on an optimal downlink.

The optimal downlink is a downlink that is determined by the base station based on a downlink measurement result of a terminal and that is with optimal channel quality, and a transceiver point that is of the base station and that corresponds to an optimal DL cell is configured to establish the optimal downlink. In this embodiment of this application, the base station has N transceiver points, including a transceiver point 1, a transceiver point 2, ..., and a transceiver point N. Assuming that the optimal downlink is established on the transceiver point 1, in step 702, the base station may send the contention-free random access indication message by using the transceiver point 1.

It should be noted that the contention-free random access indication message may be the second message in the embodiments of this application, and includes a random access preamble, information about a time-frequency resource used for the random access preamble, and random access response beam information. For example, the time-frequency resource occupied by the random access preamble belongs to a time-frequency resource configured for a first transceiver point. For example, the first transceiver point is a transceiver point on which a latest optimal uplink is established. Refer to the example in step 602. The optimal uplink is established on the transceiver point 2 of the base station.

During specific implementation, the base station may receive the random access response beam information reported by the UE, or determine the random access response beam information based on a downlink traffic beam of the terminal.

In addition, the base station allocates a specified time-frequency resource to the preamble, to identify, based on the preamble resource, that the optimal uplink of the UE is changed.

703: The UE accesses the optimal uplink cell according to a contention-free random access indication, and initiates random access.

It should be noted that a coverage cell of a transceiver point on which the optimal uplink is established may be referred to as the optimal uplink cell. Assuming that the optimal uplink determined by the base station in step 701 is an uplink established on the transceiver point N, the UE accesses a coverage cell of the transceiver point N in step 703.

704: The base station identifies the UE based on a preamble time-frequency resource, delivers an RAR on an original optimal downlink, and completes access and carrier handover.

It should be noted that the original optimal downlink is the downlink that is determined by the base station based on the downlink measurement result of the terminal and that is with optimal channel quality. If the base station identifies that the preamble time-frequency resource sent by the UE is the specified time-frequency resource, the base station may determine that the optimal uplink of the UE may have been changed, and no longer corresponds the optimal uplink. A previously determined optimal downlink is still the downlink with optimal channel quality, and the base station subsequently still performs downlink communication with the UE on the original optimal downlink.

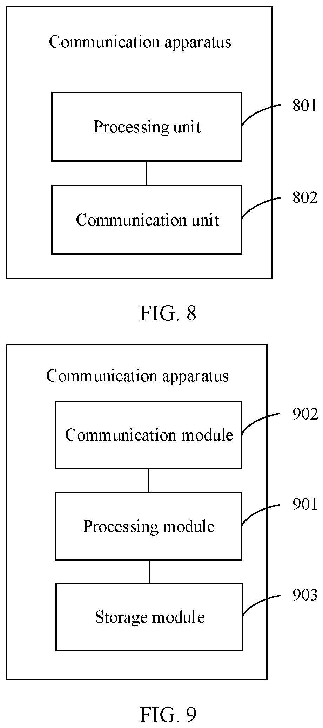

When each function module is obtained through division based on each corresponding function, FIG. 8 is a possible schematic diagram of a structure of the communication apparatus in the foregoing embodiments. The communication apparatus shown in FIG. 8 may be the access network device described in the embodiments of this application, may be a component that implements the foregoing method in the access network device, or may be a chip used in the access network device. The chip may be a system-on-a-chip (System-On-a-Chip, SOC), a baseband chip that has a communication function, or the like. As shown in FIG. 8, the communication apparatus includes a processing unit 801 and a communication unit 802. The processing unit may be one or more processors, and the communication unit may be a transceiver.

The processing unit 801 is configured to support the access network device in performing step 402, step 504, and steps 602 to 604, and/or another process of the technology described in this specification.

The communication unit 802 is configured to support communication between the communication apparatus and another communication apparatus, for example, support the access network device in performing step 401, step 403, step 502, step 503, step 505, step 601, step 604a, and step 605, and/or another process of the technology described in this specification.

It should be noted that all related content of the steps in the foregoing method embodiments may be cited in function descriptions of corresponding function modules. Details are not described herein again.

For example, when an integrated unit is used, FIG. 9 is a schematic diagram of a structure of a communication apparatus according to an embodiment of this application. In FIG. 9, the communication apparatus includes a processing module 901 and a communication module 902. The processing module 901 is configured to control and manage actions of the communication apparatus, for example, perform the step performed by the processing unit 801, and/or another process of the technology described in this specification. The communication module 902 is configured to perform the step performed by the communication unit 802, and support interaction between the communication apparatus and another device, for example, interaction with another terminal apparatus. As shown in FIG. 9, the communication apparatus may further include a storage module 903, and the storage module 903 is configured to store program code and data of the communication apparatus.

When the processing module 901 is a processor, the communication module 902 is a transceiver, and the storage module 903 is a memory, the communication apparatus is the communication apparatus shown in FIG. 3.

An embodiment of this application provides a computer-readable storage medium. The computer-readable storage medium stores instructions. The instruction is used to perform the communication methods shown in FIG. 4 to FIG. 7.

An embodiment of this application provides a computer program product including instructions. When the computer program product runs on a communication apparatus, the communication apparatus is enabled to perform the communication methods shown in FIG. 4 to FIG. 7.

An embodiment of this application provides a wireless communication apparatus. The wireless communication apparatus stores instructions. When the wireless communication apparatus runs on the communication apparatuses shown in FIG. 3, FIG. 8, and FIG. 9, the communication apparatuses are enabled to perform the communication methods shown in FIG. 4 to FIG. 7. The wireless communication apparatus may be a chip.

An embodiment of this application further provides a communication system. The communication system includes a terminal and an access network device. For example, the terminal may be the communication apparatus shown in FIG. 3, FIG. 8, or FIG. 9, and the access network device may be the communication apparatus shown in FIG. 3, FIG. 8, or FIG. 9.

For example, the terminal is configured to send a first message to the access network device.

The access network device may receive the first message by using at least two transceiver points, measure at least two uplinks based on the first message received by the at least two transceiver points, and determine a first uplink based on obtained measurement results. The access network device may send a second message to the terminal on a first downlink, where the second message is used by the terminal to perform uplink communication on the first uplink. The first uplink is an uplink with an optimal measurement result in the at least two uplinks, and the at least two uplinks are communication links between the at least two transceiver points and the terminal.

In a possible implementation, the at least two transceiver points include a first transceiver point and a second transceiver point, where the first uplink is established on the first transceiver point, and the first downlink is established on the second transceiver point.

In another possible implementation, the at least two transceiver points include a first transceiver point and a third transceiver point, where the first uplink is established on the first transceiver point, the first downlink is established on a second transceiver point, and the third transceiver point is a transceiver point corresponding to the second transceiver point.

The foregoing descriptions about implementations allow a person skilled in the art to understand that, for the purpose of convenient and brief description, division of the foregoing function modules is used as an example for illustration. In actual application, the foregoing functions can be allocated to different function modules and implemented based on a requirement, that is, an inner structure of a database access apparatus is divided into different function modules to implement all or some of the functions described above.

In the several embodiments provided in this application, it should be understood that the disclosed database access apparatus and method may be implemented in other manners. For example, the described database access apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the database access apparatuses or units may be implemented in electronic, mechanical, or other forms.

The units described as separate parts may or may not be physically separate, and parts displayed as units may be one or more physical units, may be located in one place, or may be distributed at different places. Some or all of the units may be selected based on an actual requirement to achieve an objective of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A communication method, comprising:
receiving (401) a first message from a terminal by using at least two transceiver points;
measuring (402) at least two uplinks based on the first message received by the at least two transceiver points, and determining a first uplink based on obtained measurement results, wherein the first uplink is an uplink with an optimal measurement result in the at least two uplinks, and the at least two uplinks are communication links between the at least two transceiver points and the terminal; and
sending (403) a second message to the terminal on a first downlink, wherein the second message is used by the terminal to perform uplink communication on the first uplink; and
the at least two transceiver points comprise a first transceiver point and a second transceiver point, the first uplink is established on the first transceiver point, and the first downlink is established on the second transceiver point;
**characterized in that** the first message comprises a sounding reference signal, SRS; and
the second message comprises a random access preamble, information about a time-frequency resource used for the random access preamble, and random access response beam information, the time-frequency resource used for the random access preamble belongs to a first time-frequency resource, the first time-frequency resource is a time-frequency resource configured for the first transceiver point, and the random access response beam information is used to indicate a beam for sending a random access response.

2. The method according to claim 1, wherein the method further comprises:
receiving, on the first uplink, the random access preamble sent by the terminal by using the time-frequency resource used for the random access preamble.

3. The method according to claim 2, wherein the time-frequency resource used for the random access preamble is used to indicate to perform downlink communication with the terminal on the first downlink.

4. A communication apparatus, comprising a memory, a processor, and a program that is stored in the memory and that can be run on the processor, wherein when the program is executed by the processor, cause the communication apparatus to perform the communication method according to any one of claims 1 to 3.

5. A computer-readable storage medium, comprising instructions, wherein when the instructions are executed by a computer, cause the computer to perform the communication method according to any one of claims 1 to 3.

6. A computer program product, comprising instructions, wherein when the instructions are executed by a computer, cause the computer to perform the communication method according to any one of claims 1 to 3.

## Patentansprüche

1. Kommunikationsverfahren, das umfasst:
Empfangen (401) einer ersten Nachricht von einem Endgerät unter Verwendung von mindestens zwei Transceiver-Punkten;
Messen (402) von mindestens zwei Uplinks basierend auf der ersten Nachricht, die von den mindestens zwei Transceiver-Punkten empfangen wird, und Bestimmen eines ersten Uplinks basierend auf erhaltenen Messergebnissen, wobei der erste Uplink ein Uplink mit einem optimalen Messergebnis in den mindestens zwei Uplinks ist, und die mindestens zwei Uplinks Kommunikationsverbindungen zwischen den mindestens zwei Transceiver-Punkten und dem Endgerät sind; und
Senden (403) einer zweiten Nachricht an das Endgerät auf einem ersten Downlink, wobei die zweite Nachricht von dem Endgerät verwendet wird, um eine Uplink-Kommunikation auf dem ersten Uplink durchzuführen; und
wobei die mindestens zwei Transceiver-Punkte einen ersten Transceiver-Punkt und einen zweiten Transceiver-Punkt umfassen, der erste Uplink auf dem ersten Transceiver-Punkt eingerichtet ist, und der erste Downlink auf dem zweiten Transceiver-Punkt eingerichtet ist;
**dadurch gekennzeichnet, dass** die erste Nachricht ein Sondierungsreferenzsignal, SRS, umfasst; und
die zweite Nachricht einen Direktzugriffsoberbegriff, Informationen über eine für den Direktzugriffsoberbegriff verwendete Zeit-Frequenz-Ressource und
Direktzugriffsantwortstrahlinformationen umfasst, die für den Direktzugriffsoberbegriff verwendete Zeit-Frequenz-Ressource zu einer ersten Zeit-Frequenz-Ressource gehört, die erste Zeit-Frequenz-Ressource eine für den ersten Transceiver-Punkt konfigurierte Zeit-Frequenz-Ressource ist, und die
Direktzugriffsantwortstrahlinformationen verwendet werden, um einen Strahl zum Senden einer Direktzugriffsantwort anzugeben.

2. Verfahren nach Anspruch 1, wobei das Verfahren ferner umfasst:
Empfangen, auf dem ersten Uplink, des Direktzugriffsoberbegriffs, der von dem Endgerät unter Verwendung der für den Direktzugriffsoberbegriff verwendeten Zeit-Frequenz-Ressource gesendet wird.

3. Verfahren nach Anspruch 2, wobei die für den Direktzugriffsoberbegriff verwendete Zeit-Frequenz-Ressource verwendet wird, um anzugeben, dass eine Downlink-Kommunikation mit dem Endgerät auf dem ersten Downlink durchzuführen ist.

4. Kommunikationseinrichtung, die einen Speicher, einen Prozessor und ein Programm, das in dem Speicher gespeichert ist und das auf dem Prozessor ablaufen kann, umfasst, wobei, wenn das Programm durch den Prozessor ausgeführt wird, die Kommunikationseinrichtung veranlasst wird, das Kommunikationsverfahren nach einem der Ansprüche 1 bis 3 durchzuführen.

5. Computerlesbares Speichermedium, das Anweisungen umfasst, wobei, wenn die Anweisungen auf einem Computer ausgeführt werden, der Computer veranlasst wird, das Verfahren nach einem der Ansprüche 1 bis 3 durchzuführen.

6. Computerprogrammprodukt, das Anweisungen umfasst, wobei, wenn die Anweisungen durch einen Computer ausgeführt werden, der Computer veranlasst wird, das Kommunikationsverfahren nach einem der Ansprüche 1 bis 3 durchzuführen.

## Revendications

1. Procédé de communication, comprenant :
la réception (401) d'un premier message à partir d'un terminal en utilisant au moins deux points émetteurs-récepteurs ;
la mesure (402) d'au moins deux liaisons montantes sur la base du premier message reçu par les au moins deux points émetteurs-récepteurs, et la détermination d'une première liaison montante sur la base des résultats de mesure obtenus, dans lequel la première liaison montante est une liaison montante avec un résultat de mesure optimal dans les au moins deux liaisons montantes, et les au moins deux liaisons montantes sont des liaisons de communication entre les au moins deux points émetteurs-récepteurs et le terminal ; et
l'envoi (403) d'un second message au terminal sur une première liaison descendante, dans lequel le second message est utilisé par le terminal pour effectuer une communication de liaison montante sur la première liaison montante ; et
les au moins deux points émetteurs-récepteurs comprennent un premier point émetteur-récepteur et un second point émetteur-récepteur, la première liaison montante est établie sur le premier point émetteur-récepteur, et la première liaison descendante est établie sur le second point émetteur-récepteur ;
**caractérisé en ce que** le premier message comprend un signal de référence de sondage, SRS ; et
le second message comprend un préambule d'accès aléatoire, des informations concernant une ressource temps-fréquence utilisée pour le préambule d'accès aléatoire, et des informations de faisceau de réponse d'accès aléatoire, la ressource temps-fréquence utilisée pour le préambule d'accès aléatoire appartient à une première ressource temps-fréquence, la première ressource temps-fréquence est une ressource temps-fréquence configurée pour le premier point émetteur-récepteur, et les informations de faisceau de réponse d'accès aléatoire sont utilisées pour indiquer un faisceau pour l'envoi d'une réponse d'accès aléatoire.

2. Procédé selon la revendication 1, dans lequel le procédé comprend en outre :
la réception, sur la première liaison montante, du préambule d'accès aléatoire envoyé par le terminal en utilisant la ressource temps-fréquence utilisée pour le préambule d'accès aléatoire.

3. Procédé selon la revendication 2, dans lequel la ressource temps-fréquence utilisée pour le préambule d'accès aléatoire est utilisée pour indiquer d'effectuer une communication de liaison descendante avec le terminal sur la première liaison descendante.

4. Appareil de communication, comprenant une mémoire, un processeur et un programme qui est stocké dans la mémoire et qui peut être exécuté sur le processeur, dans lequel lorsque le programme est exécuté par le processeur, celui-ci amène l'appareil de communication à effectuer le procédé de communication selon l'une quelconque des revendications 1 à 3.

5. Support de stockage lisible par ordinateur, comprenant des instructions, dans lequel, lorsque les instructions sont exécutées par un ordinateur, celles-ci amènent l'ordinateur à effectuer le procédé de communication selon l'une quelconque des revendications 1 à 3.

6. Produit-programme d'ordinateur, comprenant des instructions, dans lequel, lorsque les instructions sont exécutées par un ordinateur, celles-ci amènent l'ordinateur à effectuer le procédé de communication selon l'une quelconque des revendications 1 à 3.
